# EUROPEAN PATENT SPECIFICATION

(11) **EP 1 525 044 B1**
(45) Date of publication and mention of the grant of the patent: **12.10.2005**
(21) Application number: 03737951.8
(22) Date of filing: 18.07.2003
(51) Int. Cl.: B01D 53/58, B01D 53/14, C01C 1/00, C05C 3/00, A01K 1/00

(54) **METHOD OF PURIFYING AIR, APPARATUS FOR PURIFYING AIR AND BUILDING PROVIDED WITH THIS APPARATUS**
VERFAHREN ZUR REINIGUNG VON LUFT, VORRICHTUNG ZUR REINIGUNG VON LUFT UND MIT DIESER VORRICHTUNG VERSEHENES GEBÄUDE
PROCEDE DE PURIFICATION DE L'AIR, APPAREIL POUR PURIFIER L'AIR, ET IMMEUBLE EQUIPE DE CET APPAREIL

(30) Priority: 30.07.2002 DK 200201159
(43) Date of publication of application: 27.04.2005
(73) Proprietor: Scan-Airclean APS, Odense SV (DK)
(72) Inventor: THYGESEN, Peter, 5250 Odense SV (DK)
(74) Representative: Joergensen, Bjoern Barker
(86) International application number: PCT/DK2003/000506
(87) International publication number: WO 2004/011127

(56) References cited:
- EP-A- 0 377 476
- EP-A- 1 066 752
- EP-A- 1 344 560
- US-B1- 6 174 498
- DATABASE WPI Section Ch, Week 200263 Derwent Publications Ltd., London, GB; Class C04, AN 2002-586483 XP002256291 & JP 2002 143639 A (KURITA WATER IND LTD), 21 May 2002 (2002-05-21)

## Description

### 1. BACKGROUND OF THE INVENTION

The present invention relates to a method of purifying air comprising ammonia, such as air emanating from a stable, by scrubbing the air with an acid containing washing liquid in a scrubbing zone.

As used in the specification and claims, the term "scrubbing" means a process used in gas cleaning in which components in a gas stream are removed by contact with a liquid surface, a wetted packing, and/or a spray.

The present invention further relates to
- a process for the manufacture of a fertilizer,
- an apparatus for purifying air comprising ammonia, such as air emanating from a stable, by scrubbing with an acid containing washing liquid, and
- a building, in particular a stable, provided with a system for purifying air comprising ammonia.

### REVIEW OF PRIOR ART

US 6174498 B1 relates to an odour control system and a method for removing unwanted odorous airborne constituents in which the air is drawn through a compact, boxlike housing having a plurality of sequentially communicating treatment chambers. There is a gas stream pretreatment step in a first chamber, in fluid communication with a sump, as the air flows through a packed bed wetted by suitable chemical reagents. After pretreatment, the air stream is passed through down-stream chambers, also utilizing wetted packed beds of similar structure and function. In this manner, different, simultaneous chemical treatments are possible, within the singe housing, with different chemical reagents utilized. Reagents used in the first chamber are, in substantial part, recycled from the blowdown of the first chamber sump, which can be augmented, if desired, by unreacted chemicals in the blowdown of the downstream sump. A liquid can be drained from the sumps through a drain controlled by a valve. An example describes the use of sulphuric acid as one of the reagents when removing ammonia in a gas stream and the continual removal of the by-products such as ammonium sulphate through the overflow. The apparatus according to the invention is constructed to have all the necessary piping, chambers, sumps for the chemical included in one single housing.

As there is no physical separation of the piping, the chambers and the sumps or tanks for the chemicals for the system according to US 6174498 B1, the apparatus is of a considerable size, and the apparatus is rather cumbersome when a limited space is available. Furthermore, the maintenance and supervision of the air cleaning process cannot be accomplished in a practical way if also a requirement exists of placing the unit at an elevated height in the building. Also, it is unwanted to place large amounts of the chemicals at an elevated height in the building considering the need of refilling and draining of the chemicals.

EP 1066752 A1 relates to an air washer, which is an arrangement for washing and cleaning from a stable, provided with washing means for washing out dust, smelly components and ammonia with water, and with nitrification means for nitrifying dissolved ammonia, characterized in that the washing means and the nitrification means are embodied as separate units.

The above air washer according to the invention uses pure water as the liquid for washing or scrubbing the ammonia from the air followed by an organically based cleansing of the water. The use of pure water is not as efficient as the use of ammonia implicated by the present invention. Also, analogue considerations as for US 6174498 B1 apply regarding the physically non-separated elements of the washing means, the water supply and the control.

EP 377476 A1 relates to a method and a device for purifying air containing ammonia, said air originating from a bio-industrial process, by removing ammonia from the air mixture, characterized in that the removal of ammonia is a result of washing with an acid, and the thus obtained salt is a product that can be used again industrially.

The specification of the steps involved in the method of EP 377476 A1 is limited and EP 377476 A1 is silent on e.g. the processes occurring in the washing step. A similar consideration applies to the device disclosed in EP 377476 A1 for carrying out the method.

FR 2772638 A1 relates to a method and a device for purifying air emanating from a stable according to which the air to be purified is withdrawn from the stable and washed with a washing liquid, where after the washing liquid is oxidized and homogenizes, and the washed air is subjected to further purification treatment comprising isothermal reactive washing followed by a biological purification treatment, where after the purified air is recycled to the stable.

EP 1344560 A2 is prior art under Art. 54(3) EPC and discloses an air cleaning unit integrated in a liquid cycle in which the liquid may be treated, especially cleaned. The cleaning unit may be used for cleaning air emanating from a stable, in which case each air outlet from the stable may be provided with an air cleaning unit.

### 2. DISCLOSURE OF THE INVENTION

### Object of the Invention

It is an object of the present invention to provide a new and improved method of purifying air comprising ammonia, such as air emanating from a stable, by scrubbing the air with an acid containing washing liquid in a scrubbing zone, which has a simple lay out, is easy to adapt to the actual purification demands, has a low energy consumption, and produces an end product suitable for use as fertilizer.

It is another object of the present invention to provide a new and improved apparatus for purifying air comprising ammonia, such as air emanating from a stable, by scrubbing with an acid containing washing liquid, which has a simple lay out, is easy to adapt to the actual purification demands, has a low energy consumption, and produces an end product suitable for use as fertilizer.

Finally, it is the object of the present invention to provide a new and improved building, in particular a stable, provided with a system for purifying air comprising ammonia, which has a simple lay out, is easy to adapt to the actual purification demands, has a low energy consumption, and produces an end product suitable for use as fertilizer.

Further objects appear from the description elsewhere.

### Statement of Invention

According to an aspect of the present invention, there is provided a method as stated in claim 1.

In this text the term "washing liquid control zone/unit, arranged in a distance from the scrubbing zone/unit(s)" is intended to designate that the distance between the washing liquid control zone/unit and the scrubbing zone/unit(s) is selected as desired. This distance is at least 3 m, preferably at least 5 m, in particular at least 10 m.

Preferred embodiments are disclosed in claims 2-6.

The water content of the circulating washing liquid is kept constant by adding a volume of water corresponding to the wolume of the spent washing liquid, which is withdrawn as a product.

By operating as described above it is obtained that the pH and composition of the spent washing liquid which is withdrawn as a product is constant in time, even when the ammonia concentration in the air to be purified varies as a function of time.

By arranging the washing liquid control zone in a distance from the scrubbing zone it is obtained that the scrubbing zone can be located in such a position, e.g. at the upper part of a stable, that the air to be purified is only transported over a minimal distance, leading to a minimal energy consumption, whereas the washing liquid control zone can be arranged in a convenient position, typically at the ground level.

A further preferred embodiment is disclosed in claim 7.

According to another aspect of the present invention, there is provided an apparatus as disclosed in claim 8.

Preferred embodiments are disclosed in claims 9-25.

According to a preferred embodiment, each air cleaning unit comprises a fan with an air outlet and an air inlet connected to the air outlet of the scrubber.

The air outlets are preferably discharging the air directly to the atmosphere, and the air cleaning unit are preferably positioned in such a way that air inlets for air to be purified are situated so that the air to be purified is introduced directly into these inlets.

Hereby it is obtained that the air to be purified is only transported over a minimal distance, leading to a minimal energy consumption.

By arranging the washing liquid control unit in a distance from the at least one air cleaning unit it is thus obtained that at least one air cleaning unit can be located in such a position, e.g. at the upper part of a stable, that the air to be purified is only transported over a minimal distance, leading to a minimal energy consumption, whereas the washing liquid control zone can be arranged in a convenient position, typically at the ground level.

However, the arrangement of the washing liquid control unit in a distance from the at least one air cleaning unit provides other important advantages:

In case it appears that an apparatus according to the invention does not have the desired capacity, for instance because the ammonia production to be removed has increased compared to an original estimate, this apparatus can be modified in a very simple way by adding one air cleaning unit or the necessary number of additional air cleaning units and connecting the washing liquid outlet(s) and inlet(s) with the existing washing liquid control unit.

According to another embodiment, the scrubber is provided with means, such as nozzles, for spraying the underside of the second filling element with a liquid, such as a part of the washing liquid.

According to another aspect of the present invention, there is provided a building according to claim 26.

Preferred embodiments are disclosed in claims 27 to 31.

### 3. BRIEF DESCRIPTION OF THE DRAWINGS

In the following, by way of examples only, the invention is further disclosed with detailed description of preferred embodiments. Reference is made to the drawings in which
Fig. 1 shows an schematically embodiment of the present invention showing a single air cleaning unit suspended in a ceiling and connected via pipes to a washing liquid control unit;
Fig. 2 shows schematically another embodiment showing several air cleaning units, which are connected in parallel;
Fig. 3 shows schematically a possible embodiment of the fillings elements.

### 4. DETAILED DESCRIPTION

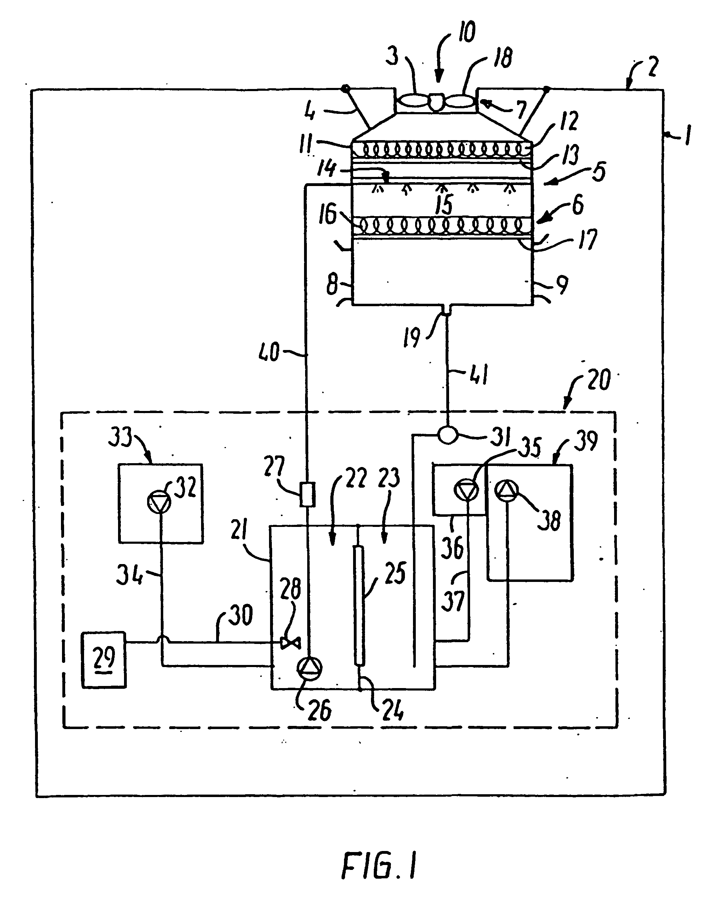

Fig. 1 schematically shows an embodiment of the invention with a system comprising a single air cleaning unit 5. The air cleaning unit 5 is placed in a stable 1, or the like where unwanted odours are to be removed from the air. The constituents in the air can be in their gas state or be air-born solid constituents such as particles. The air can be characterised as a gas with unwanted constituents. The air cleaning unit 5 is preferably situated at an elevated height in the stable 1 and may be suspended from the ceiling by suspension wires 4 or directly placed on an attic 2 in the stable 1 depending on the construction of the stable 1. It may be preferred to place the air cleaning unit 5 on top of the roof, e.g. in the case the building has a substantially flat roof or similar considerations makes such a placement preferable. The air cleaning unit may also be placed partly in the outside and partly within the building. Also, a placement of the air cleaning unit on the side of the building may be preferable. As there are several ways of constructing a building for which the system according to the invention is to be used several choices of the placements of one or more air cleaning units 5 exists and the above mentioned choices are in no way limiting to the system according to the invention.

A hole 3 or conduit leads through the ceiling near the upper end of the air cleaning unit 5, which lets air pass from the air cleaning unit 5 to the outside. The upper end of the air cleaning unit 5 is preferably formed as a neck 7 on the housing 6 of the air cleaning unit 5, constituting an air outlet 10. The housing 6 may be made of a glass fibre material, PVC, polyester, polypropylene or a similar polymer generally resistant to attack of acids. In a preferred embodiment the housing 6 is a box-like structure, height, width and length of about 2.2 m, 1.8 m and 0.9 m, respectively, the hole 3 or conduit is 0.8 m in diameter with a neck 7 of 0.2 m length and four mutually connected plates declining from the box-structure to the hole 3 constitutes the neck 7.

A fan 18 is placed at the upper end of the air cleaning unit 5, immediately outside the neck 7 in the open, or inside the neck 7, driving the air from the air cleaning unit 5, and ultimately the stable 1, out into the open. The fan 18 is of a common type preferably electrically powered described within the state of the art with a capacity depending on the circumstances such as the amount of air to be cleaned per time unit. The rotation frequency for the fan may be controlled. A droplet collector 11 or demister for moisture removal is placed below the fan 18 preferably extending to, and limited by the inner walls of the housing 6 in order to collect droplets emanating from the full area of the air stream inside of the housing 6. The droplet collector 11 can optionally be removed for maintenance. The droplet collector 11 may be constituted by a first filling element 12. This first filling element 12 may be in the shape of commercially available tubes made of polypropylene the surface of which has a mesh type open-worked structure intended normally to be used for example for cleaning water.

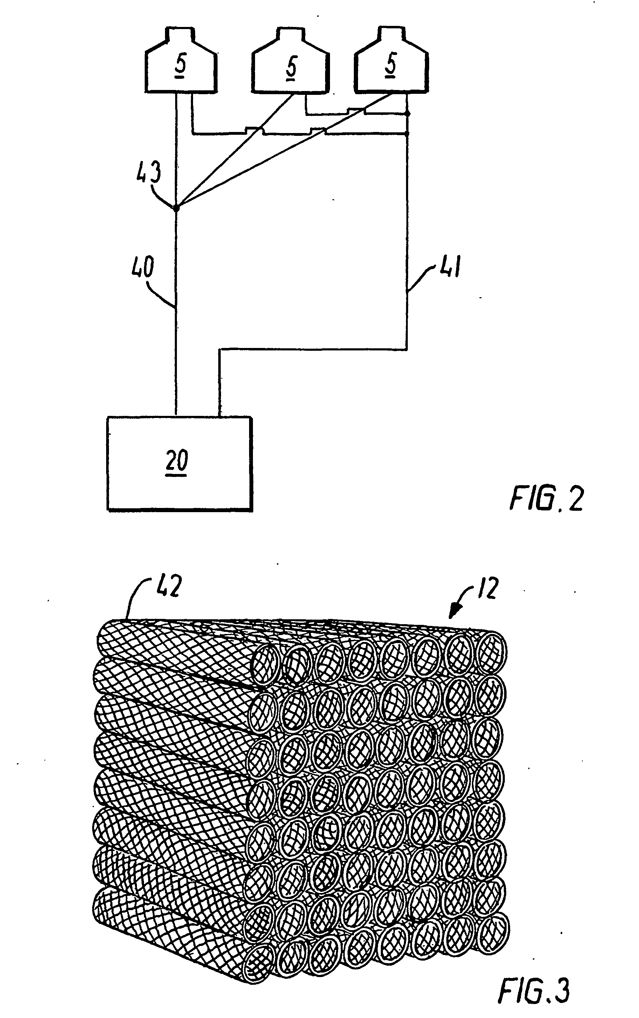

One preferred embodiment of the first filling element 12 or part of the first filling element 12 is seen is fig. 3. Several specimen of the same tube 42 is placed side-by-side along the length axis of each other constituting a horizontal layer whereupon several other horizontal layers of tubes 42 are placed. The collection of tubes 42 constitutes a pile of tubes substantially with a shape of a box. The tubes 42 are welded together. The openings of the tubes 42 are perpendicular to the direction of the air stream. Other types of first filling elements 12 characterised in having a large surface area can also be used. The droplet collector 11 substantially excludes any clogging of liquid, which may arise on its surface. The droplet collector 11 is suspended inside the housing 6 for example by placing the droplet collector 11 on a support 13 or an open-structured bed allowing air and droplets to pass through.

Spraying means 14 are placed below the droplet collector 11. A possible embodiment of the spraying means 14 is a set of spray nozzles in rows connected by a pipe section. The noales may be of a common type used for showers working with a low water pressure. The nozzles are preferably made of Teflon, polypropylene or PVS having a full cone, wide-angle non-clog construction. Certain types of nozzles being capable of providing so called atomised droplets defined as droplets with a very small droplet size is can be used but it is not necessary as the use of second filling element 16 fulfils the purpose of mixing the gaseous state with the liquid state. The spraying means 14 may also simply be constituted by one or more simple holes. The second filling element is placed below the spraying means 14 and are preferably similar in function and construction to the first filling elements 12 and may be placed on a support 17 similar to the support 13. The second filling element 16 constitutes part of the scrubbing zone 15 in the air cleaning unit 5. In a preferred embodiment the first filling element 12 and the second filling element 16 are similar thus simplifying materials needed for the production of the air cleaning unit 5. Further below, one or more air inlets 8, 9 are placed. The air inlets 8, 9 may be in the shape of simple holes in the side of the housing 6 or the bottom of the housing 6. In a preferred embodiment two holes of a diameter of about 0.6 m are situated opposite each other in the walls of a housing 6 with a box-structure. By placing the air inlets 8, 9 in the side walls no means are needed to avoid liquids from the air cleaning unit 5 in reaching the stable 1 through the air inlets 8, 9 contrary to the case when the air inlets 8, 9 are placed in the bottom plate of the housing 6. At the bottom of the air cleaning unit 5 is a drain 19 suitable for letting a liquid escape the air cleaning unit 5. The drain 19 may be a simple cut-out in the bottom plate of the housing 6. A means for shielding the drain 19 from outlet of liquid may be present below the second filling elements 16 and embodied as a bend plate whose apex is pointing away from the drain. In another embodiment, means for spraying the underside of the second filling element with a liquid is present.

A washing liquid control unit 20 is in connection with the air cleaning unit 5 via an inlet pipe 40 and an outlet pipe 41. The inlet pipe 40 and the outlet pipe 41 are preferably made of PVC, polypropylene or a similar polymer generally resistant to attack of acids and are suspended in steel wires in the ceiling of placed on the attic 2 dependent on the construction of the stable 1. In a preferred embodiment the washing liquid control unit 20 is placed outside the stable 1 so that no direct air contact is possible between the washing liquid control unit 20 and the stable 1. The distance between the washing liquid control unit 20 and the air cleaning unit may be considerable, such as in the order of the height, length or depth of the stable itself. The washing liquid control unit 20 comprises a tank 21 divided into a first tank section 22 and a second tank section 23 by a partition wall 24. A filter 25 for filtrating a liquid in the tank 21 is forming part of the partition wall 24 so that impurities as e.g. dust and insects is hindered in clogging the spraying means 14. The partition wall 24 may extend in the full height inside the tank 21 from bottom to ceiling or it may end almost at the ceiling of the tank 21. The roof of the tank 21 is preferably easy to open fully or in part when maintenance of the inner of the tank 21 is needed. The filter is preferably in the shape of long slab with a length substantially that of the height of the tank 21 and a width of approx. 0.2 m and insertable in a slit in the partition wall in an up-down way. The filter material may be a cloth material. A circulation pump 26 for circulating a liquid from the first tank section 22 to the spraying means 14 is present. The circulation pump 26 may be a seal-less, vertical, centrifugal type pump for corrosion resistance and long service life.

The circulation pump 26 is suitable for solutions over a broad pH range. Also, placed inside the first tank section 22, a water valve 28 is placed connected by a water pipe 30 from the water tank 29 to the first tank section 22. The level of liquid in the tank 21 controls the opening and closing of the water valve 28. In the washing liquid control unit 20, a flow gauge 27 is placed on the inlet pipe 40 constantly measuring the flow of the liquid in the inlet pipe 40, which thus can be monitored from the washing liquid control unit 20. An acid pipe 34 connects an acid tank 33 with the first tank section 22. The acid in the acid tank 33 is preferably sulphuric acid, H₂SO₄, and preferably concentrated H₂SO₄. An automated acid pump 32 controls the supply of acid to the first tank section 22. Likewise, an antifoaming agent pipe 37 connects an antifoaming agent tank 36 with the second tank section 23. The antifoaming agent may be a vegetable oil, or another oil or agent characterised as an antifoaming agent, hindering the generation of foam in the liquid in the system. An automated antifoaming agent pump 35 controls the supply of antifoaming agent to the second tank section 23. The inlet of antifoaming agent into the second tank section is preferably in the upper part of the tank 21.

An automated pump 38 for fertilizer mixture is placed in the washing liquid control unit 20 in order to drain a liquid from the second tank section 23. Possible occurring sludge in the tank can be removed from the tank by means of the outlet for the fertilizer mixture, and the outlet for the fertilizer mixture may be placed in the lower part of the tank 21. The fertilizer mixture is transferred to a fertilizer mixture tank 39. A pH meter 31 of a common type described within the state of the art is placed inside the washing liquid control unit 20 on the outlet pipe 41 constantly measuring the pH value of the liquid in the outlet pipe 41. The pH meter 31 is capable of generating a signal controlling the automated acid pump 32, the automated antifoaming agent pump 35 and the automated pump for the fertilizer mixture 38. The acid tank 33, the water tank 29 and the tank 21 for collecting the fertilizer mixture 39 is preferably placed outside both the stable 1 and the washing liquid control unit 20.

In operation the system will draw the air to be cleaned into one or more air cleaning units 5. The operation of an embodiment according to the invention with a system comprising a single air cleaning unit 5 will be described in the following. As the system comprises two parts, an air stream and a pipe system for the washing liquid the description will follow this division of the system where logical.

The air is driven into the air cleaning unit 5 by a fan 18 in the end of the upward part of the stream, such that the air is sucked out of the building or stable 1 thereby creating a continuous flow of air while the fan 18 is in operation. By placing the fan 18 at very end of the air stream, a chimney effect can be exploited and the energy consumption of the fan 18 is relatively lower by this placement compared to a placement of the fan 18 not exploiting the chimney effect. Furthermore, by placing the fan 18 in the upstream part of the air stream after the scrubbing zone 15 the fan 18 does not receive dust particles as compared to a construction where the fan 18 is placed in the stable 1 or building where air borne particles and dust are expected to occur. Also, by limiting the transport of air to the air cleaning unit 5, or air cleaning units 5 if more than one air cleaning unit 5 is present, a costly transport of air within the system is avoided as the air cleaning unit 5 is of a limited size compared to the whole system, the need for driving the air being limited to substantially the height of the air cleaning unit 5.

After entering the air cleaning unit 5 through one or more air inlets 8 in the bottom part of the air cleaning unit 5 the air passes the second filling element 16 on which the washing liquid is dispensed and where upon the chemical reaction between the unwanted odorous constituents is taking place. Furthermore, any gaseous and solid constituents not taking part of the chemical reaction will be dissolved or dispersed in the washing liquid. This part of the process is best described as a scrubbing of the air stream and is taking place in the scrubbing zone 15 of the air cleaning unit 5. The washing liquid is emanating from the nozzles of the spraying means 14, which is part of the pipe system. After the scrubbing zone 15, the air passes a droplet collector 11 trapping substantially all the fluid in the misty air at this point in the air cleaning unit 5. The droplet collector 11 has draining means for the collected fluid and the draining means leads the collected fluid back in the downstream direction of the air stream. Immediately after passing the droplet collector 11 the housing 6 of the air cleaning unit 5 narrows in and the air stream passes the fan 18. The air leaves the air cleaning unit 5 depleted of malodorous constituents through a simple hole 3 in the roof construction of the building into the open, the smell of the air being characterised as more acceptable than air emanating from a traditional stable.

The washing liquid flows through a pipe system connected to a tank 21 with circulation for the liquid. Starting in the first of two tank sections constituting the tank 21, the liquid is pumped through an inlet pipe 40 out of the first tank section 22 by a circulation pump 26 constantly in operation while the system operates. A flow gauge 27 on the inlet pipe 40 is constantly measuring the magnitude of the flow for the purpose of providing a means for supervision of the process. The measurement of the flow preferably constitutes a basis for a safety device discriminating between one or more magnitudes of the flow and consequently triggering an alarm for a defined critical magnitude of the flow. E.g. a relatively low value of the flow could imply a leak in the pipe system. The liquid is led to the air cleaning unit 5 and is leaving the inlet pipe 40 to be dispersed onto the second filling element 16 as described above. The liquid leaves the air cleaning unit 5 again through a drain 19 in the bottom of the air cleaning unit 5 to enter the pipe system again in an outlet pipe 41 in connection to the drain 19. The inlet pipe 40 and the outlet pipe 41 are thus communicating liquid into and out of the air cleaning unit 5 respectively. The inlet pipe 40 and the outlet pipe 41 are placed in the building where appropriate and there is a large degree of freedom when considering such construction features for the system according to the invention as the availability of the pipes for possibly occurring maintenance and safety precautions related to placement of the pipes themselves. The pipes are preferably made of PVC, polypropylene or a similar polymer generally resistant to attack of acids.

The outlet pipe 41 leads the liquid from the air cleaning unit 5 to the second tank section 23 of the tank 21. A pH meter 31 is placed on the outlet pipe 41. The on-line reading of the pH value controls the automated acid pump 32, the automated antifoaming agent pump 35 and the automated pump for the fertilizer mixture 38. The control of the abovementioned pumps 32, 35 and 38 is carried out by selecting a desired set-value for the pH value for the outlet liquid, e.g. pH = 4.0. This set-value is in the interval of pH = 2 to 6, preferably, pH = 3 to 5, and more preferably pH = 3.5 to 4.5. When a deviation from the set-value exceeding the set-value is measured by the pH meter 31, a signal is sent to the pumps in order to compensate for the deviation. For example, if the ammonia content in the air raises, the pH value of the spent washing liquid withdrawn from the air cleaning unit will increase, and more sulphuric acid be required to react with the ammonia and the signal will therefore cause the automated acid pump 32 to operate until the pH value is equal or less than the set-value. In the case of a measured pH value being lower than the set-value no action in the control system will take place and as a consequence no fertilizer mixture 38.will be drawn from the tank. The control mechanism implies that the acid content in the inlet pipe 40 is varying and the variation is following the ammonia content in the air such that the system has a sound use of the resources determined by the actual need. The variation of ammonia arises due to the daily cycle for the animals and the variations of the air circulation in the stable 1.

The signal from the pH meter 31 controls not only the acid pump 32, but also the pump 38 for draining the fertilizer mixture and the pump 35 for addition of antifoaming agent solution. A single signal for the control of these three pumps is sufficient due to the fact, that a constant interrelation is pre-set for the dosage delivered by the pumps. The control signals to the pumps 32, 35 and 38 are connected in serial and the power control follows the principal of PID-control (Proportional Integral Differential) well known within the state of art. As a consequence of this type of control, the pumps work continually supplying a varying pump function basically controlled in magnitude by the continuously measured pH value. One advantageous feature for the PID-control system being exploited in a preferred embodiment according to the invention is the minimization of statistical errors related to the pH value of the drained fertilizer mixture 38. The statistical errors can be minimized with the addition of an integrating part of the control in the PID-control system. When using the PID-control system it is preferred to use a computer such as e.g. a PC to carry out the necessary calculations involved for computing the signal to the pumps. In a preferred embodiment there is a relation of 1:7:0.1 for the pumped amount of acid to fertilizer to antifoaming agent. Other relations than the above mentioned might be chosen for the system according to the invention. The actual amounts of liquids pumped per time unit depends on the size of the system, but the amounts follow the above relationship. The optimization of the relation follows the needs for the resulting fertilizer mixture, e.g. need for adjusting the concentration of the fertilizer substances. In one measurement utilizing a relationship of 1:7:0.1 for the pumped amount of acid to fertilizer to antifoaming agent a reduction of the ammonia content of 90 %, and a reduction of the air-constituent units of 50 %, was achieved together with a resulting fertilizer mixture with a concentration of 8.1 % ammonia per weight.

The pumps 32, 35 and 38 are of a membrane pump type or a piston pump type. Other control principals than those described above may be applied for the control with the system according to the invention.

The fertilizer mixture is collected to a fertilizer tank 39 of appropriate dimensions determined by the amount of production of the fertilizer mixture and the space available. The level of liquid in the tank 21 controls the opening and closing of the water valve 28.

If more than one air cleaning unit 5 is used in an embodiment according to the invention, the two or more air cleaning units 5 may be interconnected via the pipe system and the washing liquid control unit 20. When connecting two or more air cleaning units 5 in parallel the inlet pipe may be divided to let the washing liquid flow to each of the air cleaning units 5. In fig. 3 three air cleaning units 5 connected in parallel are shown schematically. The three air cleaning units 5 share part of the inlet pipe 40 and part of the outlet pipe 41 connected to the washing liquid control unit 20. A pipe junction 43 is shown on the inlet pipe 40.

Other ways of interconnecting two or more air cleaning units 5 are also possible according to the invention.

## Claims

1. A method of purifying air comprising ammonia, such as air emanating from a stable, by scrubbing the air with an acid containing washing liquid in at least two scrubbing zones operating in parallel, comprising the steps of
- withdrawing spent washing liquid from the scrubbing zones;
- transferring the withdrawn washing liquid to a central washing liquid control zone arranged at a distance of at least 3 meters from the scrubbing zones;
- if desired, readjusting the composition of the spent washing liquid withdrawn from the scrubbing zones by addition of fresh water and fresh acid and withdrawal of a corresponding amount of the spent washing liquid as a product; and
- transferring the optionally readjusted washing liquid to the scrubbing zones as acid containing washing liquid.

2. The method according to claim 1, wherein the distances between central washing liquid control zone and the scrubbing zones are at least 10 meters.

3. The method according to any of claims 1 or 2, wherein the acid is sulphuric acid.

4. The method according to any of claims 1 to 3, wherein
- the pH value of the washing liquid withdrawn from the scrubbing zones is determined; and
- the readjustment of the composition of the spent washing liquid is carried out by a control device controlling the amount per minute of washing liquid withdrawn as a product and the amount per minute of added fresh acid so that there is a desired, fixed ratio between the two amounts per minute.

5. The method according to claim 4, wherein the control device controls the amount per minute of washing liquid withdrawn as a product and the amount per minute of added fresh acid, so that these amounts per minute are zero when the pH value of the washing liquid withdrawn from the scrubbing zones, pH_{det}, is less than a predetermined set value, pHₛₑₜ, and desired, predetermined functions of pHₛₑₜ - pH_{det} when pH_{det} is greater than PHₛₑₜ.

6. The method according to claim 5, wherein the value of pHₛₑₜ is between 2 to 6, preferably between 3 and 5, in particular between 3.5 and 4.5.

7. The method according to any of claims 4 to 6, wherein at least one auxiliary agent is added to the washing liquid, and wherein the control device controls the amount(s) per minute of added auxiliary agent(s), so that there is/are desired, fixed ratio(s) between the amounts per minute of added auxiliary agent(s) and the amount per minute of added fresh acid.

8. An apparatus for purifying air comprising ammonia, such as air emanating from a stable, by scrubbing with an acid containing washing liquid, comprising
- at least two air cleaning units operating in parallel, each comprising a scrubber in which the air to be purified is washed with the acid containing washing liquid, and from which the purified air and the spent washing liquid are withdrawn; and
- a central washing liquid control unit arranged at a distance of at least 3 meters from the air cleaning units, in which the composition of the spent washing liquid withdrawn from the air cleaning units is readjusted, if desired, by addition of fresh water and fresh acid and withdrawal of a corresponding amount of the spent washing liquid as a product, before the optionally readjusted washing liquid is transferred to and introduced into the air cleaning units as acid containing washing liquid.

9. The apparatus according to claim 8, wherein the distances between central washing liquid control zone and the scrubbing zones are at least 10 meters.

10. The apparatus according to any of claims 8 or 9, comprising
- at least one air cleaning unit comprising a
- scrubber comprising
- an air inlet for air to be purified,
- an air outlet for purified air,
- a washing liquid inlet, and
- a washing liquid outlet;
- a washing liquid control unit arranged at a distance of at least 3 meters from the air cleaning units, comprising
- a water inlet,
- an inlet for fresh acid,
- a washing liquid inlet in liquid communication with the washing liquid outlet of the scrubbers,
- a first outlet for washing liquid in liquid communication with the washing liquid inlet of the scrubbers,
- a second outlet for washing liquid, and
- a control system controlling
- the amount per minute of washing liquid withdrawn via the second outlet for washing liquid, and
- the amount per minute of fresh acid introduced via the acid inlet.

11. The apparatus according to claim 10, wherein the at least one air cleaning unit further comprises a fan with an air outlet and an air inlet connected to the air outlet of the scrubber.

12. The apparatus according to any of claims 8 to 11, further comprising
- a pH meter for determining the pH value of the washing liquid withdrawn via the washing liquid outlet of the scrubber,
and wherein the washing liquid control unit comprises
- a control system having the pH value determined by the pH meter as an input and control signals controlling
- the amount per minute of washing liquid withdrawn via the second outlet for washing liquid, and
- the amount per minute of fresh acid introduced via the acid inlet as outputs.

13. The apparatus according to any of claims 8 to 12, wherein the scrubbers are packed bed scrubbers.

14. The apparatus according to claim 13, wherein the scrubbers comprise a housing oriented vertically under operational conditions in which
- the air inlet is arranged in the lower end of the housing, preferably arranged in the side of the housing;
- the washing liquid outlet is arranged in the lower end of the housing;
- the packed bed is arranged over the air inlet and the washing liquid outlet;
- nozzles for the introduction of washing liquid are arranged over the packed bed;
- a droplet collector is arranged over the nozzles, and
- the air outlet is arranged at the upper end of the housing.

15. The apparatus according to any of claims 8 to 14, wherein the washing liquid control unit comprises a tank provided with
- the water inlet,
- the inlet for fresh acid,
- the washing liquid inlet in liquid communication with the washing liquid outlet of the scrubbers,
- the first outlet for washing liquid in liquid communication with the washing liquid inlet of the scrubbers, and
- the second outlet for washing liquid.

16. The apparatus according to claim 15, wherein the tank is divided into a first tank section and a second tank section by a liquid permeable membrane, and wherein
- the water inlet,
- the inlet for fresh acid, and
- the first outlet for washing liquid are arranged in the first tank section, and
- the washing liquid inlet, and
- the second outlet for washing liquid are arranged in the second tank section.

17. The apparatus according to any of claims 15 or 16, wherein the water inlet is provided with means for introducing fresh water which are controlled by a level indicator arranged in the tank.

18. The apparatus according to any of claims 8 to 17, wherein the washing liquid control system comprises at least one inlet for auxiliary agents.

19. The apparatus according to claim 16, wherein the washing liquid control system comprises at least one inlet for auxiliary agents arranged in the second tank section.

20. The apparatus according to claim 19, wherein the control system determines the amount of auxiliary agent(s) introduced via the inlet for auxiliary agents.

21. The apparatus according to any of claims 8 to 20, comprising a pump for the washing liquid for the provision of circulation of washing liquid between the air cleaning unit and the washing liquid control unit.

22. The apparatus according to any of claims 8 to 21, further comprising
- a pH meter for determining the pH value of the washing liquid withdrawn via the washing liquid outlet of the scrubber; and
- wherein the washing liquid control unit comprises a control system comprising a control device controlling the amount per minute of washing liquid withdrawn via the second outlet for washing liquid and the amount per minute of fresh acid introduced via the acid inlet, so that there is a desired, fixed ratio between the two amounts per minute.

23. The apparatus according to claim 22, wherein the control device controls the amount per minute of washing liquid withdrawn via the second outlet for washing liquid and the amount per minute of fresh acid introduced via the acid inlet, so that these amounts are zero when the pH value determined by the pH meter, pH_{det}, is less than a predetermined set value, pHₛₑₜ, and desired, predetermined functions of pHₛₑₜ - pH_{det} when pH_{det} is greater than pHₛₑₜ.

24. The apparatus according to claim 23, wherein the value of pHₛₑₜ is between 2 to 6, preferably between 3 and 5, in particular between 3.5 and 4.5.

25. The apparatus according to any of claims 22 to 24, wherein the washing liquid control system comprises at least one inlet for auxiliary agent(s), and wherein the control device controls the amount(s) per minute of auxiliary agent(s) introduced via the at least one inlet for auxiliary agent(s), so that there is/are desired, fixed ratio(s) between the amounts per minute of auxiliary agent(s) and the amount per minute of fresh acid introduced via the acid inlet.

26. A building, in particular a stable, provided with a system for purifying air comprising ammonia, comprising
- at least two air cleaning units operating in parallel and arranged in the upper part of the building, each comprising a scrubber in which the air to be purified is washed with the acid containing washing liquid, and from which the purified air and the spent washing liquid is withdrawn; and
- a central washing liquid control unit arranged at a distance of at least 3 meters from the air cleaning units, preferably at the ground level of the building, in which the composition of the spent washing liquid withdrawn from the air cleaning units is readjusted, if desired, by addition of fresh water and fresh acid and withdrawal of a corresponding amount of the spent washing liquid as a product, before the optionally readjusted washing liquid is transferred to and introduced into the air cleaning units as acid containing washing liquid.

27. The building according to claim 26, wherein the distances between central washing liquid control zone and the scrubbing zones are at least 10 meters.

28. The building according to claim 26 or claim 27, wherein an air cleaning unit is suspended from a ceiling in the building.

29. The building according to any of claims 26 to 28, wherein an air cleaning unit is placed in an attic of the building.

30. The building according to any of claims 26 to 29, wherein an air cleaning unit is placed on top of the roof of the building.

31. The building, in particular a stable, according to any of claims 26 to 30, the system for purifying air comprising the apparatus of any of claims 10 to 25.

## Patentansprüche

1. Verfahren zur Reinigung von Ammoniak enthaltender Luft, beispielsweise aus einem Stall ausströmender Luft, durch Waschen der Luft mit einer säurehaltigen Waschflüssigkeit in mindestens zwei parallel arbeitenden Waschzonen, umfassend folgende Stufen
- Abzug verbrauchter Waschflüssigkeit aus den Waschzonen;
- Überführen der abgezogenen Waschflüssigkeit zu einer in einem Abstand von mindestens 3 Metern von den Waschzonen angeordneten zentralen Waschflüssigkeits-Steuerzone;
- falls erwünscht, Justierung der Zusammensetzung der von den Waschzonen abgezogenen verbrauchten Waschflüssigkeit durch Zugabe von Frischwasser und frischer Säure, und Entnahme einer entsprechenden Menge der verbrauchten Waschflüssigkeit als ein Produkt; und
- Überführen der wahlfrei justierten Waschflüssigkeit zu den Waschzonen als säurehaltige Waschflüssigkeit.

2. Verfahren nach Anspruch 1, wonach die Abstände zwischen zentraler Waschflüssigkeits-Steuerzone und den Waschzonen zumindest 10 Meter betragen.

3. Verfahren nach einem der Ansprüche 1 oder 2, wonach die Säure Schwefelsäure ist.

4. Verfahren nach einem der Ansprüche 1-3, wonach
- der pH-Wert der von den Waschzonen abgezogenen Waschflüssigkeit festgestellt ist; und
- die Justierung der Zusammensetzung der verbrauchten Waschflüssigkeit von einer Steueranordnung vorgenommen wird, welche die Menge der als Produkt abgezogenen Waschflüssigkeit pro Minute und die Menge von zugesetzter frischer Säure pro Minute steuert, so dass zwischen den zwei Mengen pro Minute ein erwünschtes, festgesetztes Verhältnis besteht.

5. Verfahren nach Anspruch 4, bei welchem die Steueranordnung die Menge der als Produkt abgezogenen Waschflüssigkeit pro Minute und die Menge von zugesetzter frischer Säure pro Minute steuert, so dass diese Mengen pro Minute null sind, wenn der pH-Wert der von den Waschzonen abgezogenen Waschflüssigkeit pH_{det} kleiner als ein voraus festgesetzter Wert pHₛₑₜ ist, und erwünschte vorausbestimmte Funktionen von pHₛₑₜ - pH_{det} sind, wenn pH_{det} grösser als pHₛₑₜ ist.

6. Verfahren nach Anspruch 5, wonach der Wert von pHₛₑₜ zwischen 2 und 6, vorzugsweise zwischen 3 und 5, und besonders zwischen 3,5 und 4,5 liegt.

7. Verfahren nach einem der Ansprüche 4-6, wonach der Waschflüssigkeit mindestens ein Hilfsmittel zugesetzt wird, und bei welchem die Steueranordnung die Menge/n von zugesetztem Hilfsmittel/zugesetzten Hilfsmitteln pro Minute steuert, so dass zwischen den Mengen von zugesetztem Hilfsmittel/zugesetzten Hilfsmitteln pro Minute und der Menge von zugefügter frischer Säure pro Minute ein erwünschtes, festgesetztes Verhältnis/festgesetzte Verhältnisse vorliegt.

8. Vorrichtung zur Reinigung von Ammoniak enthaltender Luft, beispielsweise aus einem Stall ausströmender Luft, durch Waschen mit einer säurehaltigen Waschflüssigkeit, umfassend
- mindestens zwei parallel arbeitende Luftreinigungseinheiten, die jeweils einen Schrubber umfassen, in dem die zu reinigende Luft mit der säurehaltigen Waschflüssigkeit gereinigt wird, und wovon die gereinigte Luft und die verbrauchte Waschflüssigkeit abgezogen werden; und
- eine zentrale Waschflüssigkeitssteuereinheit, die in einem Abstand von mindestens 3 Metern von den Luftreinigungseinheiten angeordnet ist, in welcher die Zusammensetzung der von den Luftreinigungseinheiten abgezogenen verbrauchten Waschflüssigkeit justiert wird, falls erwünscht, durch Zusatz von Frischwasser und frischer Säure und Entnahme einer entsprechenden Menge der verbrauchten Waschflüssigkeit als ein Produkt, bevor die wahlweise justierte Waschflüssigkeit zu den Luftreinigungseinheiten überführt wird und in diese als säurehaltige Waschflüssigkeit eingeleitet wird.

9. Vorrichtung nach Anspruch 8, bei welcher die Abstände zwischen der zentralen Waschflüssigkeits-steuerzone und den Waschzonen mindestens 10 Meter betragen.

10. Vorrichtung nach einem der Ansprüche 8 oder 9, umfassend
- zumindest eine Luftreinigungseinheit mit einem Schrubber, der umfasst
- einen Lufteinlass für die zu reinigende Luft
- einen Luftauslass für gereinigte Luft
- einen Waschflüssigkeitseinlauf
- einen Waschflüssigkeitsauslauf;
- eine in einem Abstand von mindestens 3 Metern von den Luftreinigungseinheiten angeordnete Waschflüssigkeits-Steuereinheit, die umfasst
- einen Wassereinlauf
- einen Einlass für frische Säure
- einen Waschflüssigkeitseinlauf, der mit dem Waschflüssigkeitsauslauf der Schrubber in Flüssigkeitsverbindung steht,
- einen ersten Auslauf für Waschflüssigkeit, der mit dem Waschflüssigkeitseinlauf der Schrubber in Flüssigkeitsverbindung steht,
- einen zweiten Auslauf für Waschflüssigkeit, und
- ein Steuersystem, das
- die über den zweiten Auslauf für Waschflüssigkeit abgezogene Menge von Waschflüssigkeit pro Minute steuert, und
- die durch den Säureeinlass eingeführte Menge von frischer Säure pro Minute steuert.

11. Vorrichtung nach Anspruch 10, bei welcher die mindestens eine Luftreinigungseinheit ferner einen Ventilator mit einem an den Luftauslass des Schrubbers angeschlossenen Lufteinlass und Luftauslass umfasst.

12. Vorrichtung nach einem der Ansprüche 8-11, ferner umfassend
- ein pH-Messgerät zum Feststellen des pH-Werts der über den Waschflüssigkeitsauslauf des Schrubbers abgezogenen Waschflüssigkeit,
und bei welcher Vorrichtung die Waschflüssigkeitssteuereinheit umfasst
- ein Steuersystem, das den durch das pH-Messgerät festgesetztem pH-Wert als Input hat, und Steuersignale, welche
- die durch den zweiten Auslauf für Waschflüssigkeit abgezogene Menge von Waschflüssigkeit pro Minute, und
- die durch den Säureeinlass eingeleitete Menge von frischer Säure als Outputs steuern.

13. Vorrichtung nach einem der Ansprüche 8-12, wonach die Schrubber Füllkörperabscheider sind.

14. Vorrichtung nach Anspruch 13, bei welcher die Schrubber ein unter Betriebsbedingungen vertikal ausgerichtetes Gehäuse umfassen, worin
- der Lufteinlass in dem unteren Ende des Gehäuses, vorzugsweise auf der Seite des Gehäuses angeordnet ist;
- der Waschflüssigkeitsauslauf in dem unteren Ende des Gehäuses angeordnet ist;
- der Füllkörper über dem Lufteinlass und dem Waschflüssigkeitsauslauf angeordnet ist;
- Düsen zum Einleiten von Waschflüssigkeit über dem Füllkörper angeordnet sind;
- ein Tropfensammler über den Düsen angeordnet ist, und
- der Luftauslass bei dem oberen Ende des Gehäuses angeordnet ist.

15. Vorrichtung nach einem der Ansprüche 8-14, wonach die Waschflüssigkeitssteuereinheit einen Tank umfasst, mit
- dem Wassereinlauf
- dem Einlass für frische Säure
- dem Waschflüssigkeitseinlauf in Flüssigkeitsverbindung mit dem Waschflüssigkeitsauslauf der Schrubber,
- dem ersten Auslauf für Waschflüssigkeit in Flüssigkeitsverbindung mit dem Waschflüssigkeitseinlauf der Schrubber, und
- dem zweiten Auslauf für Waschflüssigkeit.

16. Vorrichtung nach Anspruch 15, wonach der Tank durch eine flüssigkeitsdurchlässige Membran in einen ersten Tankabschnitt und einen zweiten Tankabschnitt geteilt ist, und worin
- der Wassereinlauf
- der Einlass für frische Säure, und
- der erste Auslauf für Waschflüssigkeit in dem ersten Tankabschnitt, und
- der Waschflüssigkeitseinlauf, und
- der zweite Auslauf für Waschflüssigkeit in dem zweiten Tankabschnitt angeordnet sind.

17. Vorrichtung nach einem der Ansprüche 15 oder 16, wonach der Wassereinlauf mit Mitteln zum Einleiten von Frischwasser versehen ist, welche Mittel durch einen im Tank vorgesehenen Niveauanzeiger gesteuert werden.

18. Vorrichtung nach einem der Ansprüche 8-17, wonach das Waschflüssigkeits-Steuersystem mindestens einen Einlauf für Hilfsmittel umfasst.

19. Vorrichtung nach Anspruch 16, wonach das Waschflüssigkeits-Steuersystem mindestens einen in dem zweiten Tankabschnitt vorgesehenen Einlauf für Hilfsmittel umfasst.

20. Vorrichtung nach Anspruch 19, wonach das Steuersystem die Menge des durch den Einlauf für Hilfsmittel eingeleiteten Hilfsmittels/eingeleiteter Hilfsmittel bestimmt.

21. Vorrichtung nach einem der Ansprüche 8-20, umfassend eine Pumpe für die Waschflüssigkeit zwecks Zirkulieren von Waschflüssigkeit zwischen der Luftreinigungseinheit und der Waschflüssigkeits-Steuereinheit.

22. Vorrichtung nach einem der Ansprüche 8-21, umfassend ferner
- ein pH-Messgerät zum Feststellen des pH-Werts der durch den Waschflüssigkeitsauslauf des Schrubbers entnommenen Waschflüssigkeit; und
- worin die Waschflüssigkeits-Steuereinheit ein Steuersystem mit einer Steueranordnung umfasst, welche die durch den zweiten Auslauf für Waschflüssigkeit entnommene Menge von Waschflüssigkeit pro Minute und die durch den Säureeinlass eingeleitete Menge frischer Säure pro Minute steuert, so dass zwischen diesen beiden Mengen pro Minute ein erwünschtes, festgesetztes Verhältnis besteht.

23. Vorrichtung nach Anspruch 22, wonach die Steueranordnung die durch den zweiten Auslauf für Waschflüssigkeit entnommene Menge von Waschflüssigkeit pro Minute und die durch den Säureeinlass eingeleitete Menge frischer Säure pro Minute steuert, so dass diese Mengen null sind, wenn der durch das pH-Messgerät ermittelte pH-Wert pH_{det} kleiner ist als ein voraus festgesetzter Wert pHₛₑₜ, und erwünschte, voraus festgesetzte Funktionen von pHₛₑₜ - pH_{det} sind, wenn pH_{det} grösser als pHₛₑₜ ist.

24. Vorrichtung nach Anspruch 23, wonach der Wert von pHₛₑₜ zwischen 2-6, vorzugsweise zwischen 3-5, und besonders zwischen 3,5-4,5 ist.

25. Vorrichtung nach einem der Ansprüche 22-24, wonach das Waschflüssigkeits-Steuersystem mindestens einen Einlauf für Hilfsmittel umfasst, und bei welcher die Steueranordnung die durch den mindestens einen Einlauf für Hilfsmittel eingeführte Menge/Mengen von Hilfsmittel/n steuert, so dass zwischen der Menge/den Mengen von Hilfsmittel/n und der durch den Säureeinlass zugeführten Menge von frischer Säure ein erwünschtes, festgelegtes Verhältnis besteht.

26. Bau, insbesondere ein Stall, versehen mit einem System zur Reinigung von Ammoniak enthaltender Luft, umfassend
- mindestens zwei parallel arbeitende und in dem oberen Teil des Baus angeordnete Luftreinigungseinheiten, wovon jede einen Schrubber umfasst, worin die zu reinigende Luft mit der säurehaltigen Waschflüssigkeit gewaschen wird, und wovon die gereinigte Luft und die verbrauchte Waschflüssigkeit entnommen werden; und
- eine in einem Abstand von mindestens 3 Metern von der Luftreinigungseinheit, vorzugsweise auf Bodenniveau des Baus angeordnete zentrale Waschflüssigkeits-Steuereinheit, in der die Zusammensetzung der von den Luftreinigungseinheiten abgezogenen verbrauchten Waschflüssigkeit justiert wird, falls erwünscht, durch Zugabe von Frischwasser und frischer Säure und Abzug einer entsprechenden Menge der verbrauchten Waschflüssigkeit als ein Produkt, bevor die wahlweise justierte Waschflüssigkeit zu den Luftreinigungseinheiten überführt und in diese als säurehaltige Waschflüssigkeit eingeleitet wird.

27. Bau nach Anspruch 26, wonach die Abstände zwischen zentraler Waschflüssigkeits-Steuerzone und den Waschzonen mindestes 10 Meter betragen.

28. Bau nach Anspruch 26 oder 27, wonach eine Luftreinigungseinheit von einer Decke im Bau aufgehängt ist.

29. Bau nach einem der Ansprüche 26-28, wonach eine Luftreinigungseinheit in einem Speicher des Baus platziert ist.

30. Bau nach einem der Ansprüche 26-29, wonach eine Luftreinigungseinheit oben auf dem Dach des Baus platziert ist.

31. Bau, insbesondere ein Stall, nach einem der Ansprüche 26-30, wonach das System zur Reinigung von Luft die Vorrichtung nach einem der Ansprüche 10-25 umfasst.

## Revendications

1. Procédé de purification de l'air comprenant l'ammoniac tel que l'air émanant d'une étable, en lavant l'air avec un liquide de lavage contenant de l'acide dans au moins deux zones de lavage opérant parallèlement, comprenant les étapes suivantes
- retrait du liquide de lavage usagé des zones de lavage;
- transfert du liquide de lavage retiré à une zone centrale de contrôle du liquide de lavage disposée à une distance d'au moins 3 mètres des zones de lavage;
- si désiré, rajustement de la composition du liquide de lavage usagé retiré des zones de lavage par l'adjonction d'eau neuve et d'acide neuf et par le retrait d'une quantité correspondante du liquide de lavage usagé en tant qu'un produit; et
- transfert du liquide de lavage optionnellement rajusté aux zones de lavage en tant que liquide de lavage contenant de l'acide.

2. Procédé selon la revendication 1, dans lequel les distances entre la zone centrale de contrôle du liquide de lavage et les zones de lavage sont d'au moins 10 mètres.

3. Procédé selon l'une quelconque des revendications 1 ou 2, dans lequel l'acide est l'acide sulfurique.

4. Procédé selon l'une quelconque des revendications 1 à 3, dans lequel
- la valeur pH du liquide de lavage retiré des zones de lavage est déterminée; et
- le rajustement de la composition du liquide de lavage usagé est réalisé par un dispositif de contrôle contrôlant la quantité par minute de liquide de lavage retiré en tant qu'un produit et la quantité par minute d'acide neuf ajouté, de manière à établir un rapport désiré et fixé entre les deux quantités par minute.

5. Procédé selon la revendication 4, dans lequel le dispositif de contrôle contrôle la quantité par minute de liquide de lavage retiré en tant qu'un produit et la quantité par minute d'acide neuf ajouté, de manière à ce que ces quantités par minute sont égales à zéro lorsque la valeur pH du liquide de lavage retiré des zones de lavage, pH_{det}, est inférieure à une valeur fixée et prédéterminée, pHₛₑₜ, et égales à des fonctions désirées et prédéterminées de pHₛₑₜ - pH_{det} lorsque la valeur pH_{det} est supérieure à la valeur pHₛₑₜ.

6. Procédé selon la revendication 5, dans lequel la valeur pHₛₑₜ est comprise entre 2 à 6, de préférence entre 3 et 5, en particulier entre 3,5 et 4,5.

7. Procédé selon l'une quelconque des revendications 4 à 6, dans lequel au moins un agent auxiliaire est ajouté au liquide de lavage, et dans lequel le dispositif de contrôle contrôle la (les) quantité(s) par minute d'agent(s) auxiliaire(s) ajouté(s), de manière à établir un (des) rapport(s) désiré(s) et fixé(s) entre les quantités par minute d'agent(s) auxiliaire(s) ajouté(s) et la quantité par minute d'acide neuf ajouté.

8. Appareil pour purifier l'air comprenant l'ammoniac tel que l'air émanant d'une étable, en le lavant avec un liquide de lavage contenant de l'acide, comprenant
- au moins deux unités d'épuration de l'air opérant parallèlement, chacune comprenant un laveur dans lequel l'air à purifier est lavé avec le liquide de lavage contenant de l'acide, et à partir duquel l'air purifié et le liquide de lavage usagé sont retirés; et
- une unité centrale de contrôle du liquide de lavage disposée à une distance d'au moins 3 mètres des unités d'épuration de l'air, dans laquelle la composition du liquide de lavage usagé retiré des unités d'épuration de l'air est rajustée, si désiré, par l'adjonction d'eau neuve et d'acide neuf et par le retrait d'une quantité correspondante du liquide de lavage usagé en tant qu'un produit, avant le transfert du liquide de lavage optionnellement rajusté aux unités d'épuration de l'air ainsi que son introduction dans celles-ci en tant que liquide de lavage contenant de l'acide.

9. Appareil selon la revendication 8, dans lequel les distances entre la zone centrale de contrôle du liquide de lavage et les zones de lavage sont d'au moins 10 mètres.

10. Appareil selon l'une quelconque des revendications 8 ou 9, comprenant
- au moins une unité d'épuration de l'air comprenant un
- laveur comprenant
- une entrée d'air pour l'air à purifier,
- une sortie d'air pour l'air purifié,
- une entrée de liquide de lavage, et
- une sortie de liquide de lavage;
- une unité de contrôle du liquide de lavage disposée à une distance d'au moins 3 mètres des unités d'épuration de l'air, comprenant
- une entrée d'eau,
- une entrée d'acide neuf,
- une entrée de liquide de lavage en communication liquide avec la sortie de liquide de lavage des laveurs,
- une première sortie de liquide de lavage en communication liquide avec l'entrée de liquide de lavage des laveurs,
- une deuxième sortie de liquide de lavage, et
- un système de contrôle contrôlant
- la quantité par minute de liquide de lavage retiré à travers la deuxième sortie de liquide de lavage, et
- la quantité par minute d'acide neuf introduit à travers l'entrée d'acide.

11. Appareil selon la revendication 10, dans lequel ladite au moins une unité d'épuration de l'air comprend en outre un ventilateur présentant une sortie d'air et une entrée d'air reliée à la sortie d'air du laveur.

12. Appareil selon l'une quelconque des revendications 8 à 11, comprenant en outre
- un pH-mètre destiné à déterminer la valeur pH du liquide de lavage retiré à travers la sortie de liquide de lavage du laveur,
et dans lequel l'unité de contrôle du liquide de lavage comprend
- un système de contrôle ayant la valeur pH déterminée par le pH-mètre en tant que donnée d'entrée et ayant des signaux de contrôle contrôlant
- la quantité par minute de liquide de lavage retiré à travers la deuxième sortie de liquide de lavage, et
- la quantité par minute d'acide neuf introduit à travers l'entrée d'acide en tant que données de sortie.

13. Appareil selon l'une quelconque des revendications 8 à 12, dans lequel les laveurs sont des laveurs à lit fixe.

14. Appareil selon la revendication 13, dont les laveurs comprennent un logement orienté verticalement sous les conditions opérationnelles dans lequel
- l'entrée d'air est agencée dans l'extrémité inférieure du logement, étant de préférence agencée dans le côté latéral du logement;
- la sortie de liquide de lavage est agencée dans l'extrémité inférieure du logement;
- le lit fixe est disposé au-dessus de l'entrée d'air et de la sortie de liquide de lavage;
- des buses pour l'introduction de liquide de lavage sont disposées au-dessus du lit fixe;
- un collecteur de gouttelettes est disposé au-dessus des buses, et
- la sortie d'air est agencée à l'extrémité supérieure du logement.

15. Appareil selon l'une quelconque des revendications 8 à 14, dans lequel l'unité de contrôle du liquide de lavage comprend un réservoir muni de
- l'entrée d'eau,
- l'entrée d'acide neuf,
- l'entrée de liquide de lavage en communication liquide avec la sortie de liquide de lavage des laveurs,
- la première sortie de liquide de lavage en communication liquide avec l'entrée de liquide de lavage des laveurs, et de
- la deuxième sortie de liquide de lavage.

16. Appareil selon la revendication 15, dans lequel le réservoir est divisé en une première section de réservoir et une deuxième section de réservoir au moyen d'une membrane perméable au liquide, et dans lequel
- l'entrée d'eau,
- l'entrée d'acide neuf, et
- la première sortie de liquide de lavage
sont agencées dans la première section de réservoir, et
- l'entrée de liquide de lavage, et
- la deuxième sortie de liquide de lavage
sont agencées dans la deuxième section de réservoir.

17. Appareil selon l'une quelconque des revendications 15 ou 16, dans lequel l'entrée d'eau est munie de moyens pour l'introduction d'eau neuve qui sont contrôlés par un indicateur de niveau disposé dans le réservoir.

18. Appareil selon l'une quelconque des revendications 8 à 17, dans lequel le système de contrôle du liquide de lavage comprend au moins une entrée d'agents auxiliaires.

19. Appareil selon la revendication 16, dans lequel le système de contrôle du liquide de lavage comprend au moins une entrée d'agents auxiliaires agencée dans la deuxième section de réservoir.

20. Appareil selon la revendication 19, dans lequel le système de contrôle détermine la quantité d'agent(s) auxiliaires(s) introduit(s) à travers l'entrée d'agents auxiliaires.

21. Appareil selon l'une quelconque des revendications 8 à 20, comprenant une pompe pour le liquide de lavage destinée à permettre la circulation du liquide de lavage entre l'unité d'épuration de l'air et l'unité de contrôle du liquide de lavage.

22. Appareil selon l'une quelconque des revendications 8 à 21, comprenant en outre
- un pH-mètre destiné à déterminer la valeur pH du liquide de lavage retiré à travers la sortie de liquide de lavage du laveur; et
- dans lequel l'unité de contrôle du liquide de lavage comprend un système de contrôle comprenant un dispositif de contrôle contrôlant la quantité par minute de liquide de lavage retiré à travers la deuxième sortie de liquide de lavage et la quantité par minute d'acide neuf introduit à travers l'entrée d'acide, de manière à établir un rapport désiré et fixé entre les deux quantités par minute.

23. Appareil selon la revendication 22, dans lequel le dispositif de contrôle contrôle la quantité par minute de liquide de lavage retiré à travers la deuxième sortie de liquide de lavage et la quantité par minute d'acide neuf introduit à travers l'entrée d'acide, de manière à ce que ces quantités sont égales à zéro lorsque la valeur pH déterminée par le pH-mètre, pH_{det}, est inférieure à une valeur fixée et prédéterminée, pHₛₑₜ, et égales à des fonctions désirées et prédéterminées de pHₛₑₜ - pH_{det} lorsque la valeur pH_{det} est supérieure à la valeur pHₛₑₜ.

24. Appareil selon la revendication 23, dans lequel la valeur pHₛₑₜ est comprise entre 2 à 6, de préférence entre 3 et 5, en particulier entre 3,5 et 4,5.

25. Appareil selon l'une quelconque des revendications 22 à 24, dans lequel le système de contrôle du liquide de lavage comprend au moins une entrée d'agent(s) auxiliaire(s), et dans lequel le dispositif de contrôle contrôle la (les) quantité(s) par minute d'agent(s) auxiliaire(s) introduit(s) à travers ladite au moins une entrée d'agent(s) auxiliaire(s), de manière à établir un (des) rapport(s) désiré(s) et fixé(s) entre les quantités par minute d'agent(s) auxiliaire(s) et la quantité par minute d'acide neuf introduit à travers l'entrée d'acide.

26. Bâtiment, en particulier une étable, muni d'un système de purification de l'air comprenant l'ammoniac, comprenant
- au moins deux unités d'épuration de l'air opérant parallèlement et étant disposées dans la partie supérieure du bâtiment, chacune comprenant un laveur dans lequel l'air à purifier est lavé avec le liquide de lavage contenant de l'acide, et à partir duquel l'air purifié et le liquide de lavage usagé sont retirés; et
- une unité centrale de contrôle du liquide de lavage disposée à une distance d'au moins 3 mètres des unités d'épuration de l'air, de préférence au niveau du sol du bâtiment, dans laquelle la composition du liquide de lavage usagé retiré des unités d'épuration de l'air est rajustée, si désiré, par l'adjonction d'eau neuve et d'acide neuf et par le retrait d'une quantité correspondante du liquide de lavage usagé en tant qu'un produit, avant le transfert du liquide de lavage optionnellement rajusté aux unités d'épuration de l'air ainsi que son introduction dans celles-ci en tant que liquide de lavage contenant de l'acide.

27. Bâtiment selon la revendication 26, dans lequel les distances entre la zone centrale de contrôle du liquide de lavage et les zones de lavage sont d'au moins 10 mètres.

28. Bâtiment selon la revendication 26 ou la revendication 27, dans lequel une unité d'épuration de l'air est suspendue à partir d'un plafond dans le bâtiment.

29. Bâtiment selon l'une quelconque des revendications 26 à 28, dans lequel une unité d'épuration de l'air est placée dans un attique du bâtiment.

30. Bâtiment selon l'une quelconque des revendications 26 à 29, dans lequel une unité d'épuration de l'air est placée sur le haut du toit du bâtiment.

31. Bâtiment, en particulier une étable, selon l'une quelconque des revendications 26 à 30, le système de purification de l'air comprenant l'appareil selon l'une quelconque des revendications 10 à 25.
